# EUROPEAN PATENT APPLICATION

(11) **EP 4 704 388 A1**
(43) Date of publication of application: **04.03.2026**
(21) Application number: 25198521.4
(22) Date of filing: 27.08.2025
(51) Int. Cl.: H04L 9/40, G01N 3/00

(54) **TRANSFERRING TEST FILES IN DISTRIBUTED MATERIAL TESTING SYSTEMS**

(30) Priority: 27.08.2024 US 202463687390 P; 25.08.2025 US 202519308755
(71) Applicant: Illinois Tool Works Inc., Glenview IL 60025 (US)
(72) Inventor: CAESAR, Daniel Vincent, Glenview, 60025 (US); NICOL, Scott, Glenview, 60025 (US); MORSE, Jason, Glenview, 60025 (US)
(74) Representative: HGF

(57) **Abstract**

Described herein are examples of distributed material testing systems that allow users to transfer files between user groups (i.e., teams) that use different data sets. In some examples, the distributed material testing systems use a centralized data repository that is separated into distinct data sets (and/or data partitions), such that the data set used by one team is not accessible by any other team. The ability for users to transfer files to other users on different teams provides a way for files to be shared and/or copied across team data partitions, while still keeping the data partitions intact.

## Description

### CROSS REFERENCE TO RELATED APPLICATIONS

This application claims priority to, and the benefit of, U.S. Provisional Patent Application No. 63/687,390, filed August 27, 2024 entitled "TRANSFERRING TEST FILES IN DISTRIBUTED MATERIAL TESTING SYSTEMS," the entire contents of which are hereby incorporated by reference.

### TECHNICAL FIELD

The present disclosure generally relates to distributed material testing systems and, more particularly, to transferring test files in distributed material testing systems.

### BACKGROUND

Material testing machines are used to test the properties (e.g., tensile/compressive strength) of various material specimens. The particular method of testing (a.k.a. test method) may vary from material specimen to material specimen. A test file may be used to store data related to a test method.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to transferring test files in distributed material testing systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the example material testing system of FIG. 1, in accordance with aspects of this disclosure.
FIG. 3 shows a block diagram of an example distributed material testing system, in accordance with aspects of this disclosure.
FIGS. 4a and 4b show an example of a central data repository of the example distributed material testing system of FIG. 3, before and after a file transfer, in accordance with aspects of this disclosure.
FIG. 5 shows a flowchart illustrating an example file transfer process of the distributed material testing system of FIG. 3, in accordance with aspects of this disclosure.
FIGS. 6a-6e are examples of graphical user interfaces (GUIs) that might be shown during the example file transfer process of FIG. 5, in accordance with aspects of this disclosure.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

Disclosed herein are examples of a distributed material testing system that allows users to send/transfer files between user groups (i.e., teams) that use different data sets. In some examples, the distributed material testing system uses a centralized data repository that is (logically and/or physically) separated into distinct data sets (and/or data partitions), such that the data set used by one team is not accessible by any other team, but may be accessed by members of the same team at multiple material testing systems. This may be useful, for example, where a particular team (e.g., Research & Development (R&D)) needs to change and/or experiment with certain data/files without impacting the data/files used by other teams (e.g. production and/or quality assurance teams).

However, eventually a team may desire to share at least some specific portions of their sequestered data/files with other teams. For example, after an R&D team finishes developing/updating a test file, the R&D team may and want to distribute the finished test file to other (e.g. production and/or quality assurance) teams so that the other teams can perform tests with (and/or otherwise make use of) the finished file. The ability for users to send/transfer files to other users on different teams provides a way for files to be shared and/or copied across team data partitions, while still keeping the partitions intact.

Some examples of the present disclosure relate to a non-transitory computer readable medium comprising: a file; permission data indicating which files a particular user group is authorized to access or execute, the permission data indicating that a first user group is authorized to access or execute the file while a second user group is not authorized to access or execute the file; and machine readable instructions which, when executed by processing circuitry, cause the processing circuitry to: in response to receiving, from a first user of the first user group, a file transfer request to transfer the file to a second user of the second user group: make a file copy of the file, update the permission data to indicate that the second user group is authorized to access or execute the file copy, while the first user group is not authorized to access or execute the file copy, or store the file copy at a particular memory location of the non-transitory computer readable medium, the permission data indicating that the second user group is authorized to access files stored at the particular memory location, while the first user group is not authorized to access files stored at the particular memory location, and provide a notification of the transfer of the file to the second user via a user interface.

In some examples, the file is a test file that defines a method of performing or analyzing a test of a sample specimen using a material testing machine, and the file copy is a test file copy of the test file. In some examples, the machine readable instructions, when executed by the processing circuitry, further cause the processing circuitry to control the material testing machine to perform the test of the sample specimen according to the test method defined by the test file copy. In some examples, the material testing machine is controlled to perform the test according to the test method defined by the test file copy in response to a selection by the second user to execute the test file copy.

In some examples, the material testing machine is controlled to perform the test according to the test method defined by the test file copy in response to a selection by a third user of the second user group to execute the test file copy. In some examples, the machine readable instructions, when executed by the processing circuitry, further cause the processing circuitry to: determine whether the second user group is authorized to access or execute a different file version of the file; in response to determining the second user group is authorized to access or execute the different file version, prompt the second user, via the user interface, to select whether to rename the file copy, relocate the file copy, or overwrite the different file version with the file copy, and in response to receiving a selection via the user interface to overwrite the different file version with the file copy, save the file copy as a more recent version of the different file version. In some examples, the machine readable instructions, when executed by the processing circuitry, further cause the processing circuitry to: identify a user group to which the first user belongs; and in response to receiving a file transfer setup request to setup a file transfer from the first user: identify one or more files the first user is authorized to transfer based on the permission data and the user group to which the first user belongs, and identify potential users to which the one or more files can be transferred.

Some examples of the present disclosure relate to a material testing system, comprising: a material testing machine, comprising a test machine sensor, a test machine actuator, and a test machine controller configured to control the test machine actuator; a central data repository storing: a plurality of test files, a particular test file of the plurality of test files, the particular test file defining a method of performing a test of a sample specimen using the material testing machine, or of analyzing a test result of the test, and permission data indicating which test files of the plurality of test files a particular user group is authorized to access or execute, the permission data indicating that a first user group is authorized to access or execute the particular test file while a second user group is not authorized to access or execute the particular test file; and a central server comprising server processing circuitry configured to: in response to a first user of the first user group requesting to transfer the particular test file to a second user of the second user group: make a test file copy of the test file, update the permission data to indicate that the second user group is authorized to access or execute the test file copy, while the first user group is not authorized to access or execute the test file copy, or store the file copy at a particular memory location of the central data repository, the permission data indicating that the second user group is authorized to access files stored at the particular memory location, while the first user group is not authorized to access files stored at the particular memory location, and provide a notification of the transfer of the test file to the second user via a user interface.

In some examples, the material testing system further comprises a computing system in communication with the material testing machine and the central server, the computing system comprising a testing workstation and the user interface, the user interface being configured to receive a request from the first user to transfer the test file to the second user, and the testing workstation being configured to send one or more transfer command signals to the central server in response to the user interface receiving the request to transfer the test file. In some examples, the user interface is further configured to receive a test file copy execution command from the second user, the test file copy execution command being representative of a command to execute the test file copy. In some examples, the computing system further comprises computer processing circuitry, the computer processing circuitry being configured to: in response to the user interface receiving the test file copy execution command, control the material testing machine, via communication with the test machine controller, to perform the test of the sample specimen according to the test method defined by the test file copy.

In some examples, the user interface is further configured to receive a test file copy execution command from a third user of the second user group, the test file copy execution command being representative of a command to execute the test file copy. In some examples, the server processing circuitry is further configured to: determine whether the second user group is authorized to access or execute a different file version of the file, in response to determining the second user group is authorized to access or execute the different test file version, prompt the second user, via the user interface, to select whether to rename the file copy, relocate the file copy, or overwrite the different file version with the file copy, and in response to receiving a selection, via the user interface, to overwrite the different test file version with the test file copy, save the test file copy as a more recent version of the different test file version. In some examples, the server processing circuitry is further configured to: identify a user group to which the first user belongs, and in response to receiving a file transfer setup request from the first user, via the user interface: identify one or more test files the first user is authorized to transfer based on the permission data and the user group to which the first user belongs, and identify potential users to which the one or more test files can be transferred.

Some examples of the present disclosure relate to a method, comprising: storing, in a central data repository: a plurality of test files, a particular test file of the plurality of test files, the particular test file defining a method of performing a test of a sample specimen using the material testing machine, or of analyzing a test result of the test, and permission data indicating which test files of the plurality of test files a particular user group is authorized to access or execute, the permission data indicating that a first user group is authorized to access or execute the particular test file while a second user group is not authorized to access or execute the particular test file; and in response to a first user of the first user group requesting, via a first user interface, to transfer the particular test file to a second user of the second user group: make a test file copy of the test file via server processing circuitry of a central server, update the permission data, via the server processing circuitry, to indicate that the second user group is authorized to access or execute the test file copy, while the first user group is not authorized to access or execute the test file copy, or store the file copy at a particular memory location of the central data repository, the permission data indicating that the second user group is authorized to access files stored at the particular memory location, while the first user group is not authorized to access files stored at the particular memory location, and provide a notification of the transfer of the test file to the second user via the first user interface or a second user interface.

In some examples, the method further comprises controlling the material testing machine, via a testing workstation, to perform the test of the sample specimen according to the test method defined by the test file copy. In some examples, the material testing machine is controlled to perform the test according to the test method defined by the test file copy in response to a selection by the second user to execute the test file copy. In some examples, the material testing machine is controlled to perform the test according to the test method defined by the test file copy in response to a selection by a third user of the second user group to execute the test file copy.

In some examples, the method further comprises determining, via the server processing circuitry, whether the second user group is authorized to access or execute a different file version of the file; in response to determining the second user group is authorized to access or execute the different file version, prompt the second user, via the first or second user interface, to select whether to rename the file copy, relocate the file copy, or overwrite the different file version with the file copy; and in response to receiving a selection via the user interface to overwrite the different test file version with the test file copy, save the test file copy as a more recent version of the different test file version. In some examples, the method further comprises identifying, via the server processing circuitry, a user group to which the first user belongs; and in response to receiving a file transfer setup request to setup a file transfer from the first user: identifying one or more test files the first user is authorized to transfer based on the permission data and the user group to which the first user belongs, and identifying potential users to which the one or more files may be transferred.

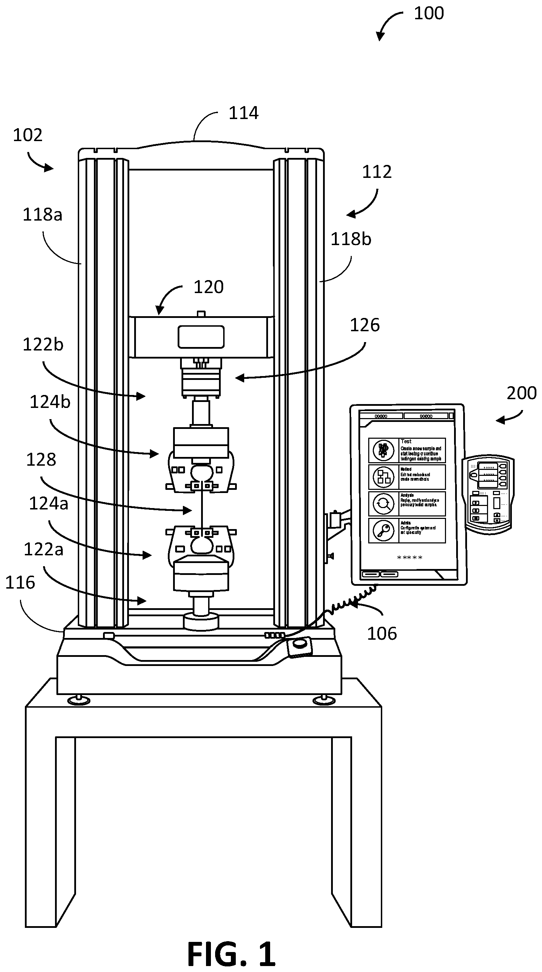

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

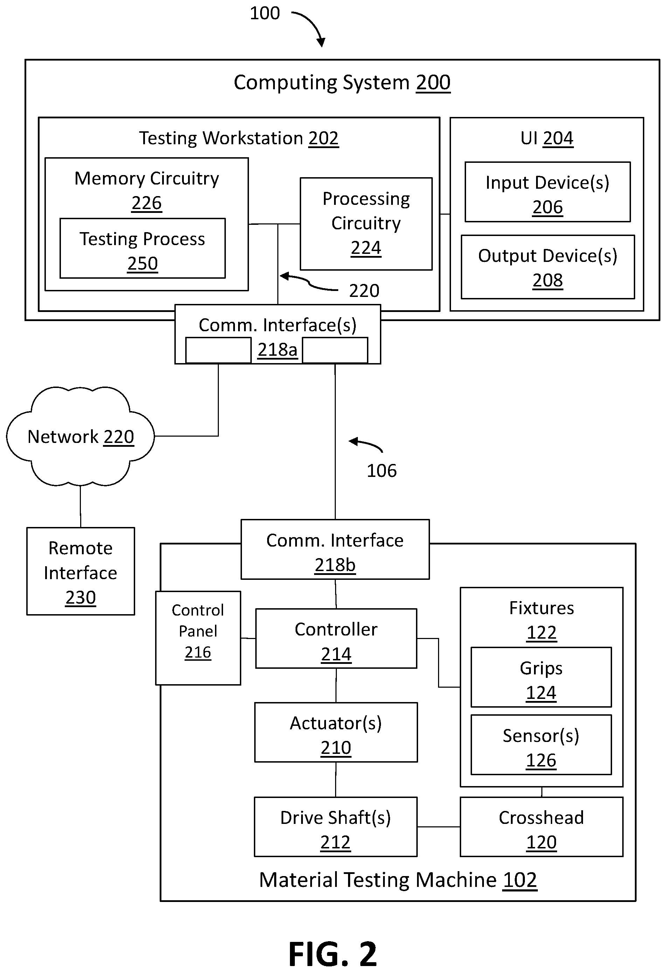

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124.

In the example of FIG. 1, the grips 124 are holding a test specimen 128. While shown as a (e.g., steel) rope/wire, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a network interface 218b of the material testing machine 102. In some examples, the network interface 218b includes hardware, firmware, and/or software to connect the material testing machine 102 to a complementary workstation network interface 218a of the computing system 200. In some examples, the controller 214 may receive information (e.g., commands) from the computing system 200 through the network interfaces 218, and/or send information (e.g., measurement data from sensor(s) 126) to the computing system 200 through the workstation network interfaces 218.

In the example of FIG. 2, the computing system 200 includes a testing workstation 202 and a user interface (UI) 204 interconnected with one another. As shown, the **UI** 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the UI 204 may output one or more representations of a material testing process 250 configured to allow a user to setup and/or execute a test method and/or analyze test results of the test method. In some examples, the input device(s) 206 of the UI 204 may receive input from a user, and send input data representative of the user input to the testing workstation 202.

In the example of FIG. 2, the example testing workstation 202 includes workstation network interfaces 218a. In some examples, the workstation network interfaces 218a includes hardware, firmware, and/or software configured to facilitate communication between the testing workstation 202 and one or more external systems, networks, and/or devices. As shown, one workstation network interface 218a is in communication with the network interface 218b of the material testing machine 102 through cable 106. As shown, the testing workstation 202 further includes a workstation network interface 218a in communication with a network 220 (e.g., the Internet). In the example of FIG. 2, the testing workstation 202 is in communication with a remote interface 230 through the network 220 and workstation network interface 218a. In some examples, the testing workstation 202 may be in communication with one or more other testing systems, servers, and/or other devices through the network and/or workstation network interface(s) 218a. As shown, the workstation network interfaces 218a are electrically connected to a common electrical bus 219 of the testing workstation 202.

In some examples, the testing workstation may be a computing device. In the example of FIG. 2, the testing workstation 202 includes workstation processing circuitry 224 connected to the common electrical bus 219. In some examples, the workstation processing circuitry 224 may comprise one or more processors. In some examples, the workstation processing circuitry 224 is configured to process information received from the UI 204, data importation device(s) 108, and/or material testing machine 102.

In some examples, the workstation processing circuitry 224 is configured to transmit (e.g., via network interface(s) 218a) commands and/or test parameters to the material testing machine 102. In some examples, the workstation processing circuitry 224 is configured to output information to an operator through the UI 204. In some examples, the workstation processing circuitry 224 is configured to execute machine readable instructions stored in workstation memory circuitry 226.

In the example of FIG. 2, the testing workstation 202 further includes workstation memory circuitry 226 connected to the common electrical bus 219. As shown, the workstation memory circuitry 226 includes a material testing process 250. In some examples, the material testing process 250 comprises machine readable instructions. In some examples, the workstation processing circuitry 224 is configured to execute the machine readable instructions of the material testing process 250 to communicate with (e.g., the controller 214 of) the material testing machine 102 to execute a test of a material specimen 128.

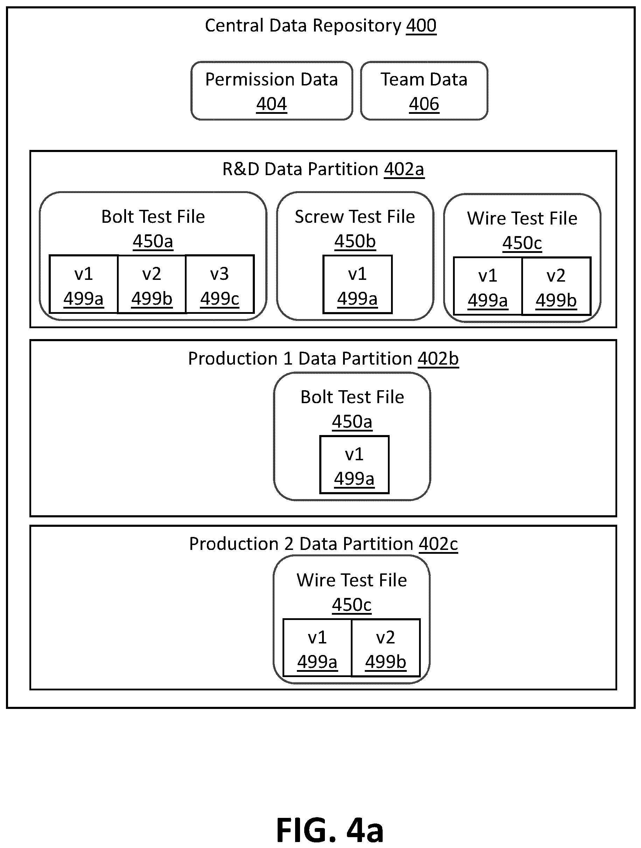

In some examples, a test of a material specimen 128 is performed (and/or its test results analyzed) according to a particular test method. In some examples, the test method is defined by the parameters of a test file 450 (see, e.g., FIGS. 4a-4b). As used herein, a test file 450 refers to a collection of (e.g., stored) data that is representative of one or more (e.g., test, sample/specimen, analysis, etc.) parameters that (at least partially) define a test method.

For example, test parameters of the test file 450 may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other relevant to a particular test method.

As another example, specimen parameters may include, a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen 128. As another example, analysis parameters may include one or more algorithms that may be used to evaluate results of the test method (and/or produce additional test results), one or more test result report format(s), and/or one or more thresholds and/or threshold ranges (e.g., by which test results may be adjudged to determine whether the specimen 128 passed or failed the test). In some examples, the parameters represented by a test file 450 may be used to setup and/or execute a test method, and/or analyze the subsequent test results of the test method.

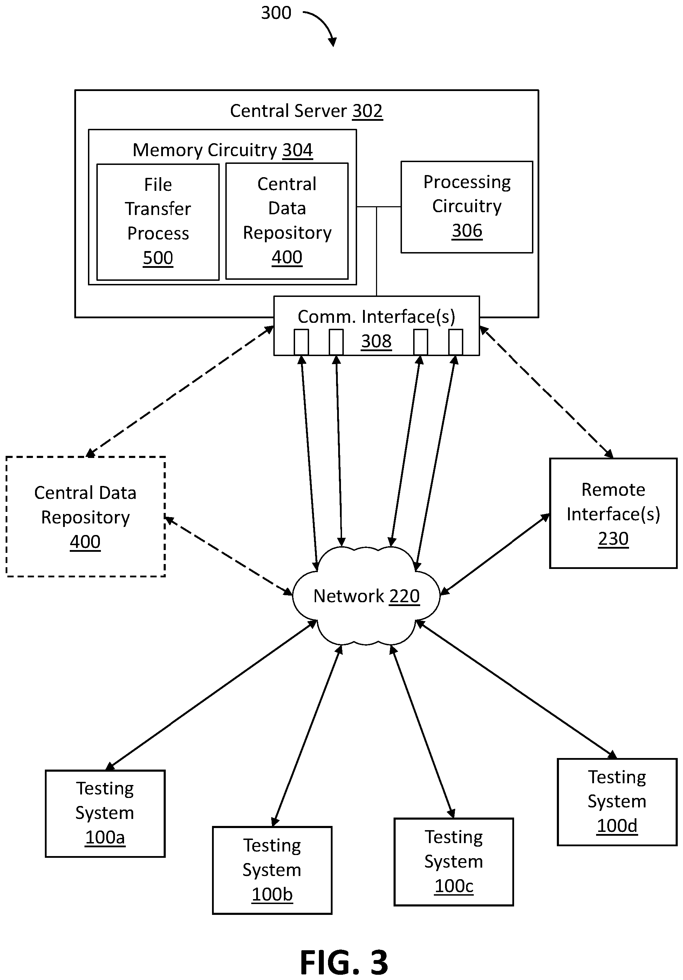

FIG. 3 shows an example of a distributed material testing system 300 having a central data repository 400 that stores a plurality of test files 450 (see FIGS. 4a-4b) that may be used by a plurality of material testing systems 100. In some examples, storing test files 450 in a central data repository 400 may be helpful when there are several material testing systems 100 that need to use the same test file 450, as a single copy of the test file 450 may be stored rather than each material testing system 100 having its own copy. Having a single central copy of the test file 450 both saves on memory space, and also helps to ensure that each material testing system 100 is using the same test file 450 (and thereby running the same test method), which may be important for documentation and/or compliance with certain regulations.

In the example of FIG. 3, the central data repository 400 is shown as being part of the server memory circuitry 304 of a central server 302. Several material testing systems 100 are shown as being connected (and/or in communication) with the central server 302, through the server communication interfaces 308 of the central server 302 and the network 220 (and/or the communication interface(s) 218 of the testing workstation 202). Through the connection with the central server 302, the material testing systems 100 are connected (and/or in communication) with the central data repository 400.

While a certain number of material testing systems 100 are shown in the example of FIG. 3, in some examples, more or fewer material testing systems 100 may be connected with the central server 302 and/or central data repository 400. While shown as part of the server memory circuitry 304 of the central server 302 in the example of FIG. 3, in some examples, the central data repository 400 may alternatively, or additionally, be separate from the central server 302. In such examples, the server network interface(s) 308 may additionally be in communication with the central data repository 400.

In the example of FIG. 3, the central server 302 further includes server processing circuitry 306. In some examples, the server processing circuitry 306 may comprise one or more processors. In some examples, the server processing circuitry 224 is configured execute machine readable instructions stored in the server memory circuitry 304, and/or query the central data repository 400.

FIGS. 4a-4b show examples of the central data repository 400. In some examples, the central data repository 400 may comprise one or more different data structures (e.g., databases, file systems, look up tables, etc.).

In the examples of FIGS. 4a-4b, the central data repository 400 is separated into several different data partitions 402, where data in one data partition 402 is (logically and/or physically) sequestered and/or separated from data in another data partition 402. The data partitions 402 can be useful, for example, in situations where a particular group of users uses a particular set of data that is not relevant to other groups of users.

For example, it may be prudent for all the users of a particular production team (or other user group) to all use empirically verified test file(s) 450 and/or test method(s) when testing products coming off a production line. Thus, the team members of the particular production team may all have access to the data/files in the same data partition 402, and the ability to modify those data/files may be limited (e.g., to team leaders). As another example, a different production team may test a different product, and/or have access to a different type of material testing machine 102. In such situation, the different production team may have access to a different data partition 402 (and/or different data/files) pertaining to the particular products they test and/or the types of material testing machine(s) 100 they use.

As another example, an R&D team may be responsible for doing research on new and/or existing products and/or test methods, and may therefore develop new (and/or update existing) test files. However, the R&D team may want to create, change, and/or otherwise experiment with certain data/files without impacting the data/files used by other users (e.g. the production teams). In such an example, the R & D team may have access to their own data partition 402 that is separate from the production data partitions 402.

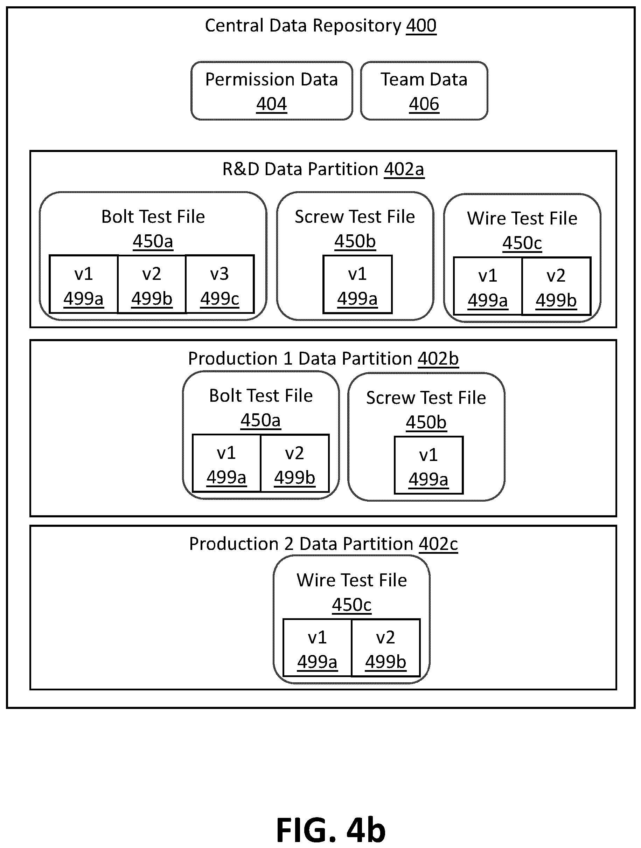

In the example of FIGS 4a-4b, the central data repository 400 includes three data partitions 402: an R&D data partition 402a, a first production team partition 402b, and a second production team partition 402c. While three data partitions 402 are shown in the central data repository 400 of FIG. 4, in some examples, the central data repository 400 may have more or fewer partitions 402. Though two of the partitions 402 are labeled as being for two different production teams, while the third partition 402 is labeled as being for an R&D team, in some examples, the partitions 402 may be differently labeled and/or designated for use by different teams. While each partition 402 is shown as storing certain test files 450, in some examples the partitions 402 may additionally, or alternatively, store different test files 450 and/or other data/files (e.g., other than test files 450).

In the example of FIGS. 4a-4b, the R&D data partition 402a and the second production team data partition 402c are both shown as including multiple versions 499 of a test file 450. In some examples, the central data repository 400 may store different versions 499 of the test files 450 (and/or other files). For example, if a first version 499 of a file is modified and then saved, the central data repository 400 may save a second version 499 of the file with the modifications, rather than overwriting the first version 499 of the file. In some examples, this may allow users to continue to access prior versions 499 of a test file 450, which may be useful for comparison with newer versions 499 (e.g., if a newer version 499 starts to cause errors, malfunctions, strange results, etc.). In some examples, each version 499 of a file may be associated with one or more timestamps and/or other data (e.g., team/user that last modified/saved, etc.).

In the example of FIGS. 4a-4b, the central data repository 400 further stores permission data 404 and team data 406. In some examples, the team data 406 indicates which users belong to which teams. In some examples, the permission data 404 indicates which team is authorized to access, modify, and/or execute data/files in a particular data partition 402. In some examples, the permission data 404 may additionally, or alternatively, implement the data partitions 402, such as by indicating that the files in a particular data partition 402 are only accessible, editable, and/or executable by the particular user(s)/team(s) with access to the particular data partition 402. In some examples, the data partitions 402 may alternatively, or additionally, be implemented by storing files of a particular data partition 402 in a memory location (and/or on a physical hard drive) that is distinct from other data partitions 402.

In some examples, the permission data 404 may indicate which users are authorized to transfer files from one team to another, and/or receive a file transfer. In some examples, the distributed material testing system 300 may allow for certain users to transfer files from one team (and/or one team's data partition 402) to another team (and/or another team's data partition 402). This may be helpful when, for example, the R&D team finishes developing/updating a test file 450, and wants to distribute the finished test file 450 to the production team(s) so the production team(s) can perform tests with (and/or otherwise make use of) the finished test file 450. In some examples, the ability to transfer files from one team to another may also be useful to transfer result data between production teams, to the R&D team, and/or to some third party team for analysis.

In some examples, the only certain users may be authorized to actually transfer a file from one team to another, and/or to receive a file transfer from another user. For example, the team data 406 may identify a team leader in each team, and the permission data 404 may specify that any team leader may be authorized to make and/or receive a file transfer. As another example, the permission data 404 may individually identify users authorized to make and/or receive a file transfer. While only certain team members may be authorized to receive a file transfer, and a file transfer is made from individual one user to another, in some examples, once the file transfer is approved, the transferred file may be available to (and/or accessible by) all team members.

In the example of FIG. 3, the server memory circuitry 304 stores a file transfer process 500. While shown as part of the server memory circuitry 304 in the example of FIG. 3, in some examples, the file transfer process 500 may be implemented using discrete circuitry (e.g., of the server processing circuitry 306). In some examples, the file transfer process 500 is implemented using non-transitory machine readable instructions stored in the server memory circuitry 304 and/or executed by the server processing circuitry 306. In some examples, portions of the file transfer process 500 may additionally, or alternatively, be stored in workstation memory circuitry 226 of one or more material testing systems 100, and/or executed (and/or implemented by) workstation processing circuitry 224 of one or more material testing systems 100.

In some examples, the server processing circuitry 306 is configured to execute the machine readable instructions of the file transfer process 500 to transfer a file from one team to another. In some examples, the file transfer may be made in response to a request of a particular team member. In some examples, the "transfer" of the file is implemented by copying the file from one data partition 402 to another data partition 402, such that any team member of the receiving team has access to the file after the transfer, and any changes made to the transferred file by one team will not be visible to another (unless there is another transfer).

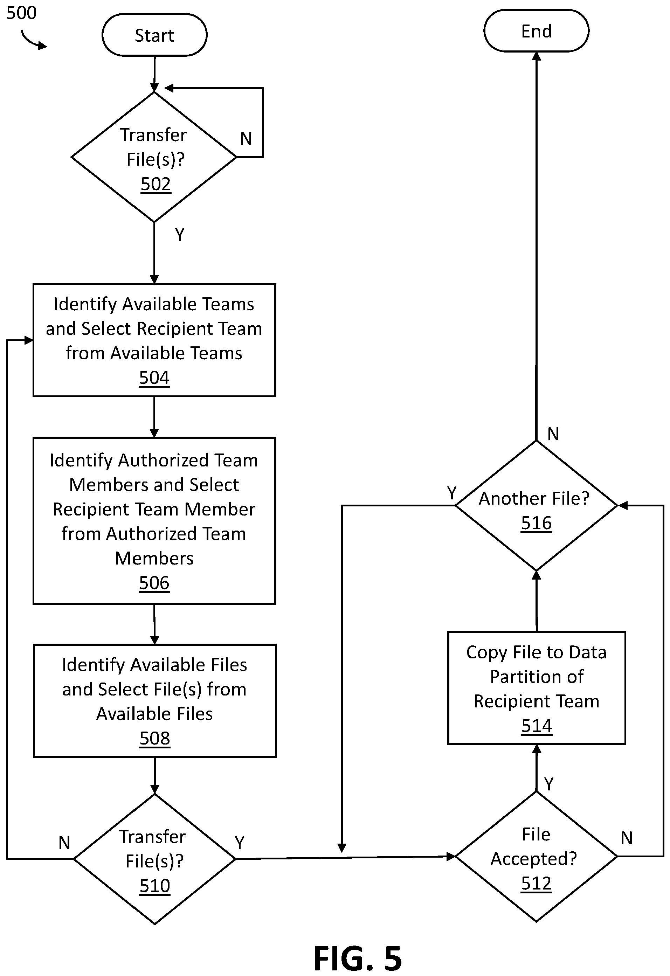

FIG. 5 is a flow diagram showing example operation of the file transfer process 500. In some examples, before using and/or progressing through the file transfer process 500, a user may be required to login and/or be authenticated (e.g., using user credentials, biometrics, RFID/NFC/Bluetooth/barcode devices, etc.). While the file transfer process 500 is sometimes described below as conducting certain actions for the sake of understanding and convenience, it should be understood that one or more of the above described components of the distributed material testing system 300 (e.g., the server processing circuitry 306, remote interface(s) 230, material testing system(s) 100, etc.) may undertake the actions on behalf (and/or according to instructions) of the file transfer process 500.

In the example of FIG. 5, the file transfer process 500 begins at block 502, where the file transfer process 500 determines whether there should be a transfer of a file. In some examples, the determination at block 502 may be based on whether there has been a file transfer request. In some examples, a file transfer request may be made by a user, such as through appropriate input using the UI 204 and/or a remote interface 230. In some examples, only certain users may be authorized to make a file transfer requests (e.g., as indicated by the permission data 404). While included in the example of FIG. 5 for the sake of understanding and completeness, in some examples, block 502 may actually be a precursor to the beginning of the file transfer process 500.

After the file transfer process 500 determines there should be a transfer of a file at block 502, the file transfer process 500 proceeds to block 504, where the file transfer process 500 identifies one or more different teams to which a file can be transferred. For example, the user may not be able to transfer a file to their own team, or own team members, but may be able to transfer the file to some other team in the distributed material testing system 300. In some examples, the identification at block 504 may involve analysis of the team data 406, permission data 404, and/or user identity (e.g., as established at login). After the one or more different teams to which a file can be transferred are identified at block 504, the identified one or more different teams may be presented to the user, such as via output the UI 204 and/or remote interface 230.

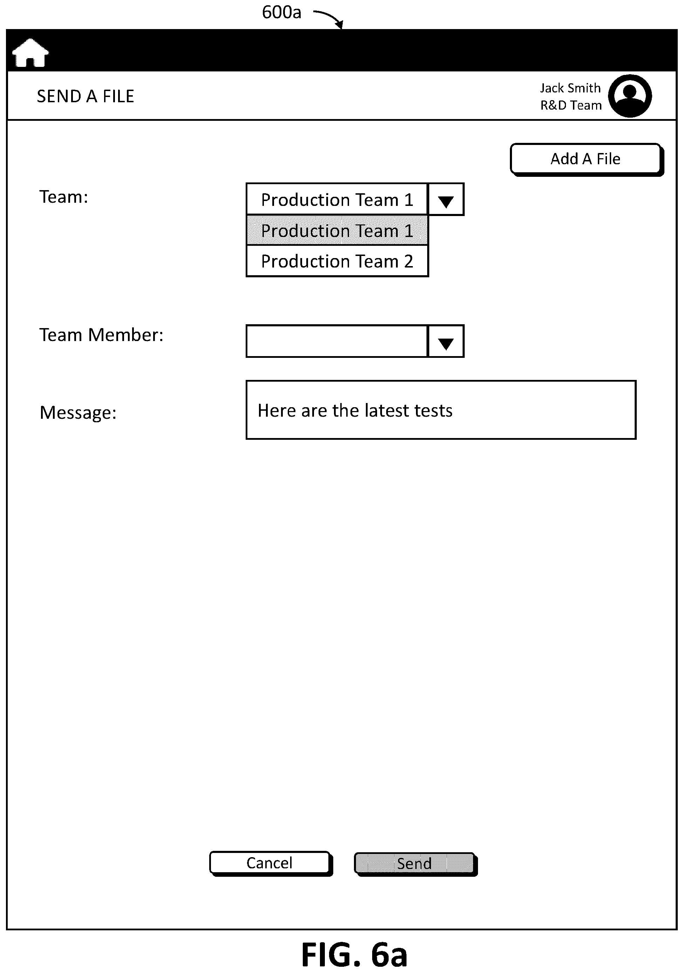

FIG. 6a shows an example of a graphical user interface (GUI) 600a that might be presented to the user at block 504. As shown, the GUI 600 includes a team drop down dialog box that gives the user the option to select the first production team or the second production team as the recipient for the file transfer. Notably, the user is not provided the option to transfer the file to the R&D team, as the user is part of the R&D team. As shown, the user has selected the Production Team 1 as the team recipient.

In the example of FIG. 5, the file transfer process 500 receives the team selection at block 504, then proceeds to block 506 where the file transfer process 500 identifies one or more different team members of the selected team to which the file can be transferred. In some examples, the identification(s) at block 506 may involve analysis of the team data 406 and/or permission data 404. For example, the permission data 404 may indicate that only certain members of a particular team (e.g., team leaders) may be authorized to receive file transfers, while other members of the team are not so authorized. Alternatively, or additionally, the permission data 404 may indicate that any member of a particular team is authorized to receive file transfers. After the one or more different team members to which a file can be transferred are identified at block 506, the identified one or more different team members may be presented to the user, such as via output the UI 204 and/or remote interface 230.

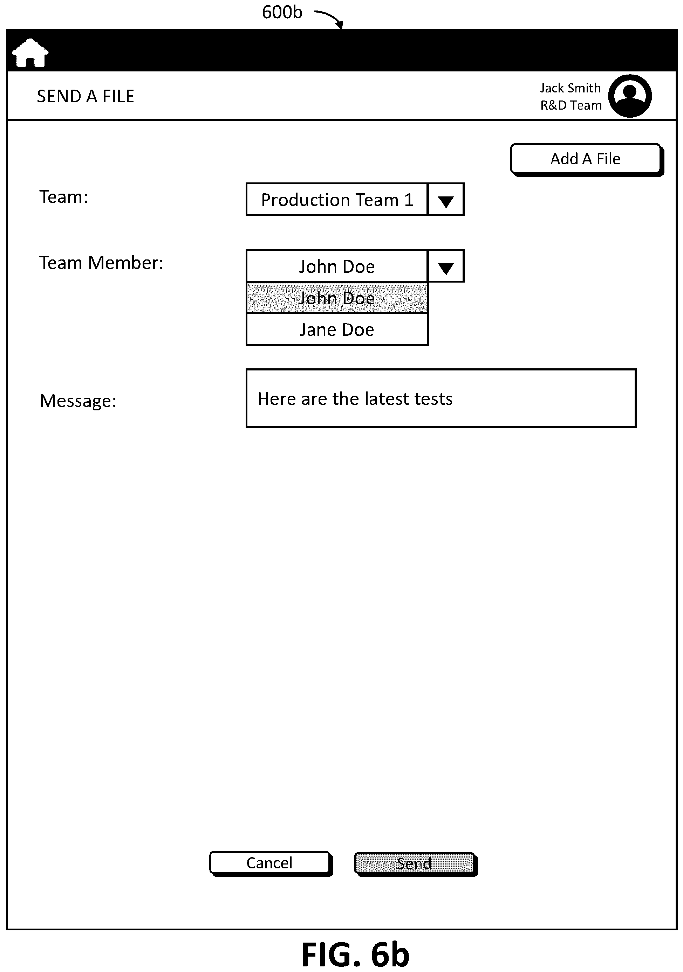

FIG. 6b shows an example of the GUI 600b where the team has been selected, and the authorized team member recipients of the team identified. As shown, the authorized team member recipients of the selected team are shown to the user via a team member dropdown dialog, and the user has selected John Doe to receive the file transfer.

In the example of FIG. 5, the file transfer process 500 receives the team member selection at block 506. In some examples, multiple team members, and/or a group of team members may be selected at block 506. For example, the user may select to send to all team leaders of the selected team.

After the selection of the team member(s) at block 506, the file transfer process 500 then proceeds to block 508 where the file transfer process 500 identifies one or more files (and/or one or more file versions 499) that the user is authorized to transfer. In some examples, the identification(s) at block 508 may involve analysis of the team data 406 and/or permission data 404. For example, the permission data 404 may indicate that any file (and/or file version 499) in a data partition 402 that the user (and/or the user's team) is authorized to access may be transferred. Alternatively, the permission data 404 may indicate that, even in the data partition(s) 402 that the user (and/or the user's team) is authorized to access, only certain files (and/or file versions 499) may be transferrable (e.g., as indicated by the permission data 402). After the one or more different files (and/or file versions 499) available to be transferred are identified at block 508, the files (and/or file versions 499) may be presented to the user, such as via output the UI 204 and/or remote interface 230.

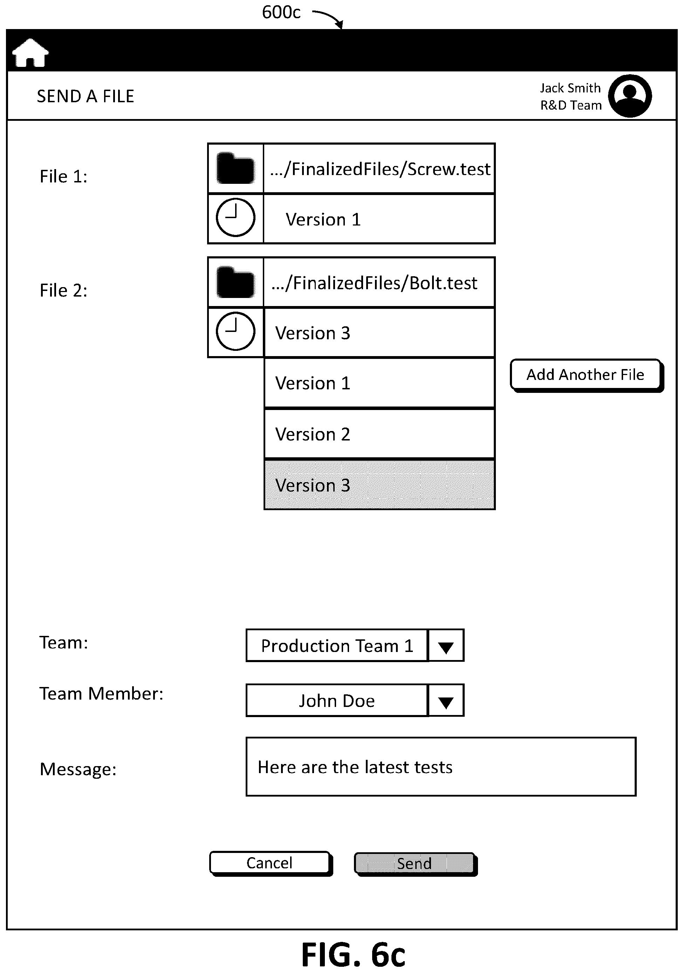

FIG. 6c shows an example of the GUI 600c where the team and team member has been selected. As shown, two test files 450 to be transferred have also been selected. In particular, a bolt test file 450a and screw test file 450b have been selected to be transferred. The file paths for both test files 450 are shown next to file folder icons.

In some examples, the file paths for the files to be transferred may be manually entered. In some examples, the file paths may be automatically filled in by the file transfer process 500, such as, for example, upon selection of the file via a file explorer window (not shown). In some examples, a file explorer window may be opened via selection of the file folder icon next to the file paths. The file explorer window may show those files that are available to be transferred, and allow the user to navigate and select one or more of the available files.

In the example of FIG. 6c, the GUI 600c also shows which version 499 of each test file 450 has been selected for transfer. More particularly, a third version 499c of the bolt test file 450a and a first version 499a of the screw test file 450b have been selected to be transferred. In the example of FIG. 6c, a clock icon is shown next to the selected version number. Also shown is a file version drop down dialog listing the versions 499 available for selection for the bolt test file 450a. In some examples, the file version drop down dialog may show the list of available versions 499 in response to user selection of the clock icon.

In the example of FIG. 5, once the team, team member, and files have been selected (and any message added), the file transfer process 500 proceeds to block 510 where the file transfer process 500 determines whether the selected file(s) should be transferred to the selected team member. In some examples, the determination at block 510 may involve determining whether a transfer signal has been received from the UI 204 and/or remote interface 230, such as may occur, for example, after the user selects the "Send" button in the GUI 600c. If the file transfer process 500 determines at block 510 that the selected file(s) should be transferred, the file transfer process 500 proceeds to block 512.

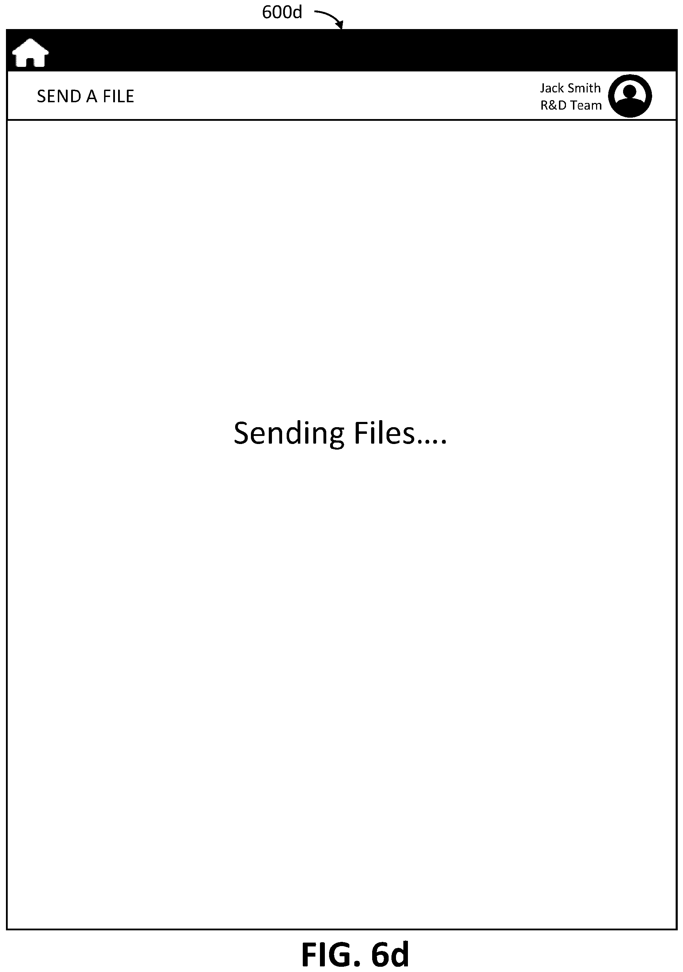

FIG. 6d shows an example of the GUI 600d after the user selects to send the test files 450 at block 510. As shown, the GUI 600 displays a message indicating that the test files 450 are being sent. In some examples, the GUI 600d may close after displaying the message. In some examples, the file transfer process 500 may also appear to end from the sending user's perspective after the file transfer process 500 proceeds from block 510 to block 512.

In some examples, the recipient user is notified that someone has sent one or more files at block 510. Thereafter, at block 512, the file transfer process 500 determines whether there has been some indication from the recipient that a file transfer has been accepted or rejected by the recipient. If the file is accepted, the file transfer process 500 copies the transferred file from the data partition 402 of the sender to the data partition 402 of the recipient at block 514. To the extent the file already exists at the data partition 402 of the recipient, the file transfer process 500 may append the sent file as a new version 499 of the existing file. If the file is rejected by the recipient user, the file transfer process 500 repeats blocks 512-516 for each other file, or ends if there are no other files.

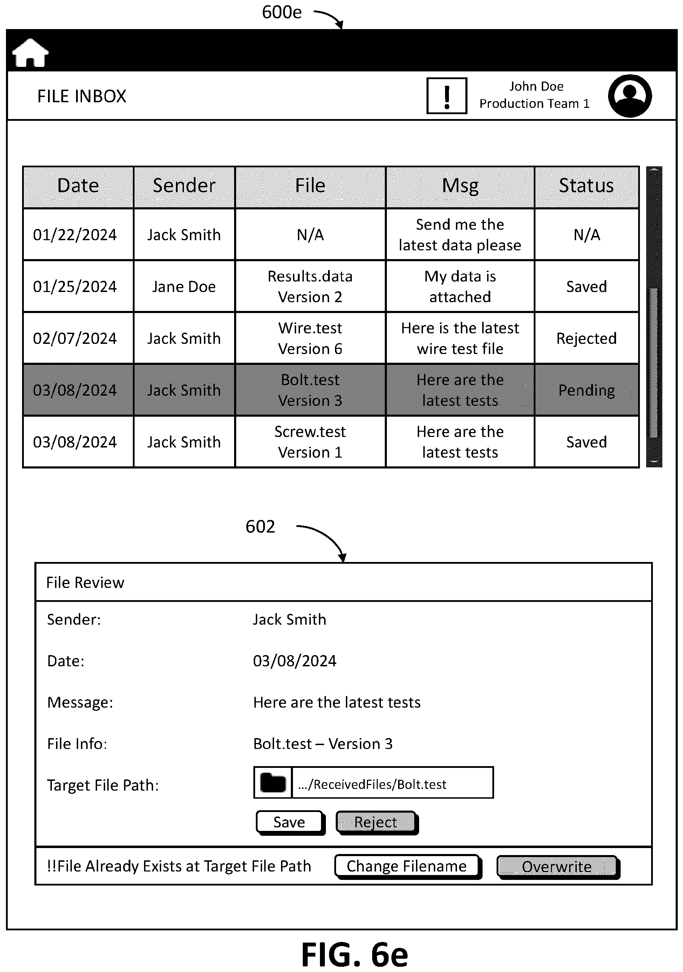

FIG. 6e shows an example of the GUI 600e from the recipient user perspective at block 512. As shown, the recipient user is presented with an inbox showing a date ordered list of files that have been sent, along with information about the sender and any accompanying message. The GUI 600e further shows that the bolt test file 450a inbox entry has been selected.

In the example of FIG. 6e, a file review window 602 is also shown populated with information pertaining to the selected inbox entry. For example, the file review window 602 shows the file path at which the transferred test file 450 will be stored if the transferred test file 450 is accepted (e.g., by selecting to "Save"). In the example of FIG. 6e, the file review window 602 also shows a warning that the same version of the test file 450 already exists at the identified file path. The recipient user is given the option to either change the file path, or "overwrite" the existing test file 450 by appending the transferred test file 450 as a new version 499 of the existing test file 450.

FIG. 4b shows an example of the central data repository 400 after the recipient user selects to "overwrite" the existing test file 450 by appending the transferred test file 450 as a new version 499 of the existing test file 450. As shown, the first production team data partition 402b now has a second version 499b of the bolt test file 450a and a first version 499a of the screw test file 450b, where no such test files 450 and/or versions 499 existed before (e.g., in the example of FIG. 4a). Once available in the first production team data partition 402b, any team members of the first production team may be able to access, edit, and/or execute the test files 450.

The disclosed distributed material testing system 300 and file transfer process 500 allow for users to send/transfer files between user groups (i.e., teams) that use that us different data partitions 402. The ability for users to transfer files to other users on different teams provides a way for files to be shared and/or copied across team data partitions 402, while still keeping the data partitions 402 intact. This may be useful, for example, when a particular (e.g., R&D) team finishes developing and/or updating a test file 450 and wants to allow another (e.g. production) team to make use of the finished test file 450. Once transferred, any team member on the recipient team can use the transferred test file 450 to perform tests via a material testing system 100.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

Certain embodiments of the invention are described in the following clauses:
Clause 1. A non-transitory computer readable medium comprising:
   a file;
   permission data indicating which files a particular user group is authorized to access or execute, the permission data indicating that a first user group is authorized to access or execute the file while a second user group is not authorized to access or execute the file; and
   machine readable instructions which, when executed by processing circuitry, cause the processing circuitry to:
      in response to receiving, from a first user of the first user group, a file transfer request to transfer the file to a second user of the second user group:
      make a file copy of the file,
      update the permission data to indicate that the second user group is authorized to access or execute the file copy, while the first user group is not authorized to access or execute the file copy, or store the file copy at a particular memory location of the non-transitory computer readable medium, the permission data indicating that the second user group is authorized to access files stored at the particular memory location, while the first user group is not authorized to access files stored at the particular memory location, and
      provide a notification of the transfer of the file to the second user via a user interface.
Clause 2. The non-transitory computer readable medium of clause 1, wherein the file is a test file that defines a method of performing or analyzing a test of a sample specimen using a material testing machine, and the file copy is a test file copy of the test file.
Clause 3. The non-transitory computer readable medium of clause 2, wherein the machine readable instructions, when executed by the processing circuitry, further cause the processing circuitry to control the material testing machine to perform the test of the sample specimen according to the test method defined by the test file copy.
Clause 4. The non-transitory computer readable medium of clause 3, wherein the material testing machine is controlled to perform the test according to the test method defined by the test file copy in response to a selection by the second user to execute the test file copy.
Clause 5. The non-transitory computer readable medium of clause 3, wherein the material testing machine is controlled to perform the test according to the test method defined by the test file copy in response to a selection by a third user of the second user group to execute the test file copy.
Clause 6. The non-transitory computer readable medium of clause 1, wherein the machine readable instructions, when executed by the processing circuitry, further cause the processing circuitry to:
   determine whether the second user group is authorized to access or execute a different file version of the file;
   in response to determining the second user group is authorized to access or execute the different file version, prompt the second user, via the user interface, to select whether to rename the file copy, relocate the file copy, or overwrite the different file version with the file copy, and
   in response to receiving a selection via the user interface to overwrite the different file version with the file copy, save the file copy as a more recent version of the different file version.
Clause 7. The non-transitory computer readable medium of clause 1, wherein the machine readable instructions, when executed by the processing circuitry, further cause the processing circuitry to:
   identify a user group to which the first user belongs; and
   in response to receiving a file transfer setup request to setup a file transfer from the first user:
      identify one or more files the first user is authorized to transfer based on the permission data and the user group to which the first user belongs, and
      identify potential users to which the one or more files can be transferred.
Clause 8. A material testing system, comprising:
   a material testing machine, comprising a test machine sensor, a test machine actuator, and a test machine controller configured to control the test machine actuator;
   a central data repository storing:
      a plurality of test files,
      a particular test file of the plurality of test files, the particular test file defining a method of performing a test of a sample specimen using the material testing machine, or of analyzing a test result of the test, and
      permission data indicating which test files of the plurality of test files a particular user group is authorized to access or execute, the permission data indicating that a first user group is authorized to access or execute the particular test file while a second user group is not authorized to access or execute the particular test file; and
   a central server comprising server processing circuitry configured to:
      in response to a first user of the first user group requesting to transfer the particular test file to a second user of the second user group:
      make a test file copy of the test file,
      update the permission data to indicate that the second user group is authorized to access or execute the test file copy, while the first user group is not authorized to access or execute the test file copy, or store the file copy at a particular memory location of the central data repository, the permission data indicating that the second user group is authorized to access files stored at the particular memory location, while the first user group is not authorized to access files stored at the particular memory location, and
      provide a notification of the transfer of the test file to the second user via a user interface.
Clause 9. The material testing system of clause 8, further comprising a computing system in communication with the material testing machine and the central server, the computing system comprising a testing workstation and the user interface, the user interface being configured to receive a request from the first user to transfer the test file to the second user, and the testing workstation being configured to send one or more transfer command signals to the central server in response to the user interface receiving the request to transfer the test file.
Clause 10. The material testing system of clause 9, wherein the user interface is further configured to receive a test file copy execution command from the second user, the test file copy execution command being representative of a command to execute the test file copy.
Clause 11. The material testing system of clause 10, wherein the computing system further comprises computer processing circuitry, the computer processing circuitry being configured to:
   in response to the user interface receiving the test file copy execution command, control the material testing machine, via communication with the test machine controller, to perform the test of the sample specimen according to the test method defined by the test file copy.
Clause 12. The material testing system of clause 9, wherein the user interface is further configured to receive a test file copy execution command from a third user of the second user group, the test file copy execution command being representative of a command to execute the test file copy.
Clause 13. The material testing system of clause 8, wherein the server processing circuitry is further configured to:
   determine whether the second user group is authorized to access or execute a different file version of the file,
   in response to determining the second user group is authorized to access or execute the different test file version, prompt the second user, via the user interface, to select whether to rename the file copy, relocate the file copy, or overwrite the different file version with the file copy, and
   in response to receiving a selection, via the user interface, to overwrite the different test file version with the test file copy, save the test file copy as a more recent version of the different test file version.
Clause 14. The material testing system of clause 8, wherein the server processing circuitry is further configured to:
   identify a user group to which the first user belongs, and
   in response to receiving a file transfer setup request from the first user, via the user interface:
      identify one or more test files the first user is authorized to transfer based on the permission data and the user group to which the first user belongs, and
      identify potential users to which the one or more test files can be transferred.
Clause 15. A method, comprising:
   storing, in a central data repository:
      a plurality of test files,
      a particular test file of the plurality of test files, the particular test file defining a method of performing a test of a sample specimen using the material testing machine, or of analyzing a test result of the test, and
      permission data indicating which test files of the plurality of test files a particular user group is authorized to access or execute, the permission data indicating that a first user group is authorized to access or execute the particular test file while a second user group is not authorized to access or execute the particular test file; and
   in response to a first user of the first user group requesting, via a first user interface, to transfer the particular test file to a second user of the second user group:
      make a test file copy of the test file via server processing circuitry of a central server,
      update the permission data, via the server processing circuitry, to indicate that the second user group is authorized to access or execute the test file copy, while the first user group is not authorized to access or execute the test file copy, or store the file copy at a particular memory location of the central data repository, the permission data indicating that the second user group is authorized to access files stored at the particular memory location, while the first user group is not authorized to access files stored at the particular memory location, and
      provide a notification of the transfer of the test file to the second user via the first user interface or a second user interface.
Clause 16. The method of clause 15, further comprising controlling the material testing machine, via a testing workstation, to perform the test of the sample specimen according to the test method defined by the test file copy.
Clause 17. The method of clause 16, wherein the material testing machine is controlled to perform the test according to the test method defined by the test file copy in response to a selection by the second user to execute the test file copy.
Clause 18. The method of clause 16, wherein the material testing machine is controlled to perform the test according to the test method defined by the test file copy in response to a selection by a third user of the second user group to execute the test file copy.
Clause 19. The method of clause 15, further comprising:
   determining, via the server processing circuitry, whether the second user group is authorized to access or execute a different file version of the file;
   in response to determining the second user group is authorized to access or execute the different file version, prompt the second user, via the first or second user interface, to select whether to rename the file copy, relocate the file copy, or overwrite the different file version with the file copy; and
   in response to receiving a selection via the user interface to overwrite the different test file version with the test file copy, save the test file copy as a more recent version of the different test file version.
Clause 20. The method of clause 15, further comprising:
   identifying, via the server processing circuitry, a user group to which the first user belongs; and
   in response to receiving a file transfer setup request to setup a file transfer from the first user:
      identifying one or more test files the first user is authorized to transfer based on the permission data and the user group to which the first user belongs, and identifying potential users to which the one or more files may be transferred.

## Claims

1. A non-transitory computer readable medium comprising:
a file;
permission data indicating which files a particular user group is authorized to access or execute, the permission data indicating that a first user group is authorized to access or execute the file while a second user group is not authorized to access or execute the file; and
machine readable instructions which, when executed by processing circuitry, cause the processing circuitry to:
in response to receiving, from a first user of the first user group, a file transfer request to transfer the file to a second user of the second user group:
make a file copy of the file,
update the permission data to indicate that the second user group is authorized to access or execute the file copy, while the first user group is not authorized to access or execute the file copy, or store the file copy at a particular memory location of the non-transitory computer readable medium, the permission data indicating that the second user group is authorized to access files stored at the particular memory location, while the first user group is not authorized to access files stored at the particular memory location, and
provide a notification of the transfer of the file to the second user via a user interface.

2. The non-transitory computer readable medium of claim 1, wherein the file is a test file that defines a method of performing or analyzing a test of a sample specimen using a material testing machine, and the file copy is a test file copy of the test file.

3. The non-transitory computer readable medium of claim 2, wherein the machine readable instructions, when executed by the processing circuitry, further cause the processing circuitry to control the material testing machine to perform the test of the sample specimen according to the test method defined by the test file copy.

4. The non-transitory computer readable medium of claim 3, wherein the material testing machine is controlled to perform the test according to the test method defined by the test file copy in response to a selection by the second user to execute the test file copy, or
wherein the material testing machine is controlled to perform the test according to the test method defined by the test file copy in response to a selection by a third user of the second user group to execute the test file copy.

5. The non-transitory computer readable medium of any one of claims 1 to **4,** wherein the machine readable instructions, when executed by the processing circuitry, further cause the processing circuitry to:
determine whether the second user group is authorized to access or execute a different file version of the file;
in response to determining the second user group is authorized to access or execute the different file version, prompt the second user, via the user interface, to select whether to rename the file copy, relocate the file copy, or overwrite the different file version with the file copy, and
in response to receiving a selection via the user interface to overwrite the different file version with the file copy, save the file copy as a more recent version of the different file version, and/or
wherein the machine readable instructions, when executed by the processing circuitry, further cause the processing circuitry to:
identify a user group to which the first user belongs; and
in response to receiving a file transfer setup request to setup a file transfer from the first user:
identify one or more files the first user is authorized to transfer based on the permission data and the user group to which the first user belongs, and
identify potential users to which the one or more files can be transferred.

6. A material testing system, comprising:
a material testing machine, comprising a test machine sensor, a test machine actuator, and a test machine controller configured to control the test machine actuator;
a central data repository storing:
a plurality of test files,
a particular test file of the plurality of test files, the particular test file defining a method of performing a test of a sample specimen using the material testing machine, or of analyzing a test result of the test, and
permission data indicating which test files of the plurality of test files a particular user group is authorized to access or execute, the permission data indicating that a first user group is authorized to access or execute the particular test file while a second user group is not authorized to access or execute the particular test file; and
a central server comprising server processing circuitry configured to:
in response to a first user of the first user group requesting to transfer the particular test file to a second user of the second user group:
make a test file copy of the test file,
update the permission data to indicate that the second user group is authorized to access or execute the test file copy, while the first user group is not authorized to access or execute the test file copy, or store the file copy at a particular memory location of the central data repository, the permission data indicating that the second user group is authorized to access files stored at the particular memory location, while the first user group is not authorized to access files stored at the particular memory location, and
provide a notification of the transfer of the test file to the second user via a user interface.

7. The material testing system of claim 6, further comprising a computing system in communication with the material testing machine and the central server, the computing system comprising a testing workstation and the user interface, the user interface being configured to receive a request from the first user to transfer the test file to the second user, and the testing workstation being configured to send one or more transfer command signals to the central server in response to the user interface receiving the request to transfer the test file.

8. The material testing system of claim 7, wherein the user interface is further configured to receive a test file copy execution command from the second user, the test file copy execution command being representative of a command to execute the test file copy.

9. The material testing system of claim 8, wherein the computing system further comprises computer processing circuitry, the computer processing circuitry being configured to:
in response to the user interface receiving the test file copy execution command, control the material testing machine, via communication with the test machine controller, to perform the test of the sample specimen according to the test method defined by the test file copy.

10. The material testing system of claim 7, wherein the user interface is further configured to receive a test file copy execution command from a third user of the second user group, the test file copy execution command being representative of a command to execute the test file copy.

11. The material testing system of any one of claims 6 to 10, wherein the server processing circuitry is further configured to:
determine whether the second user group is authorized to access or execute a different file version of the file,
in response to determining the second user group is authorized to access or execute the different test file version, prompt the second user, via the user interface, to select whether to rename the file copy, relocate the file copy, or overwrite the different file version with the file copy, and
in response to receiving a selection, via the user interface, to overwrite the different test file version with the test file copy, save the test file copy as a more recent version of the different test file version, and/or
wherein the server processing circuitry is further configured to:
identify a user group to which the first user belongs, and
in response to receiving a file transfer setup request from the first user, via the user interface:
identify one or more test files the first user is authorized to transfer based on the permission data and the user group to which the first user belongs, and
identify potential users to which the one or more test files can be transferred.

12. A method, comprising:
storing, in a central data repository:
a plurality of test files,
a particular test file of the plurality of test files, the particular test file defining a method of performing a test of a sample specimen using the material testing machine, or of analyzing a test result of the test, and
permission data indicating which test files of the plurality of test files a particular user group is authorized to access or execute, the permission data indicating that a first user group is authorized to access or execute the particular test file while a second user group is not authorized to access or execute the particular test file; and
in response to a first user of the first user group requesting, via a first user interface, to transfer the particular test file to a second user of the second user group:
make a test file copy of the test file via server processing circuitry of a central server,
update the permission data, via the server processing circuitry, to indicate that the second user group is authorized to access or execute the test file copy, while the first user group is not authorized to access or execute the test file copy, or store the file copy at a particular memory location of the central data repository, the permission data indicating that the second user group is authorized to access files stored at the particular memory location, while the first user group is not authorized to access files stored at the particular memory location, and
provide a notification of the transfer of the test file to the second user via the first user interface or a second user interface.

13. The method of claim 12, further comprising controlling the material testing machine, via a testing workstation, to perform the test of the sample specimen according to the test method defined by the test file copy.

14. The method of claim 13, wherein the material testing machine is controlled to perform the test according to the test method defined by the test file copy in response to a selection by the second user to execute the test file copy, or
wherein the material testing machine is controlled to perform the test according to the test method defined by the test file copy in response to a selection by a third user of the second user group to execute the test file copy.

15. The method of any one of claims 12 to 14, further comprising:
determining, via the server processing circuitry, whether the second user group is authorized to access or execute a different file version of the file;
in response to determining the second user group is authorized to access or execute the different file version, prompt the second user, via the first or second user interface, to select whether to rename the file copy, relocate the file copy, or overwrite the different file version with the file copy; and
in response to receiving a selection via the user interface to overwrite the different test file version with the test file copy, save the test file copy as a more recent version of the different test file version, and/or
the method further comprising:
identifying, via the server processing circuitry, a user group to which the first user belongs; and
in response to receiving a file transfer setup request to setup a file transfer from the first user:
identifying one or more test files the first user is authorized to transfer based on the permission data and the user group to which the first user belongs, and
identifying potential users to which the one or more files may be transferred.
